# EUROPEAN PATENT SPECIFICATION

(11) **EP 0 345 944 B1**
(45) Date of publication and mention of the grant of the patent: **08.09.1993**
(21) Application number: 89304540.1
(22) Date of filing: 05.05.1989
(51) Int. Cl.: F16J 15/36

(54) **Mechanical seal assembly**
Gleitringdichtung
Garniture mécanique d'étanchéité

(30) Priority: 26.05.1988 US 199335
(43) Date of publication of application: 13.12.1989
(73) Proprietor: BW/IP INTERNATIONAL INC., Long Beach California 90802-4371 (US)
(72) Inventor: Hufford, Larry Arthur, Vista California 92083 (US)
(74) Representative: Allden, Thomas Stanley

(56) References cited:
- EP-A- 0 050 882
- FR-A- 2 594 519
- US-A- 3 391 939
- US-A- 4 364 571
- US-A- 4 386 785

## Description

This invention relates to mechanical seal assemblies.

Mechanical seal assemblies are conventionally used in fluid handling apparatus, such as pumps and the like, to substantially prevent the leakage of process fluid, which may be corrosive, along a shaft to the motor or bearing system which drives the apparatus. Such leakage could seriously affect the motor or bearing system and probably cause its destruction. Mechanical seal assemblies generally are constructed with a pair of seal rings, one connected to and rotatable with the shaft, and the other, non-rotatable and connected to the housing and the like. Each seal ring is provided with a lapped seal face, the seal faces of the rings oppose one another in engaging relationship, and rotate relative to one another. At least one of the seal rings is constructed of a relatively hard, non-weldable material, such as silicon carbide, tungsten carbide and the like, while the other seal ring is constructed of a similar or different material which could be silicon carbide, a graphitic material and the like. Means, such as springs, bellows and the like are employed to urge the seal faces in rubbing contact with one another. A slight leakage of fluid, which may be supplied to the seal faces, cools and lubricates the relatively rotating and engaging seal faces to prolong their useful operating life.

The rubbing contact between the seal faces of mechanical seals and the wear characteristics of seal rings dictates the use of relatively hard materials for the seal rings, such as the aforesaid silicon carbide and the like. The attachment and sealing of these hard materials to the supporting structure of the assembly is dependent upon the material used, the particular arrangement of components, and the operating conditions of the assembly. In some assemblies, a secondary elastomeric seal, such as an elastomer O-ring is used between the seal ring and its supporting structure, as for example, a support flange. In high temperature apparatus, on the order of 500 degrees F (= 260°C) and above, a secondary elastomeric seal between a seal ring and its supporting structure cannot be used because of the temperature limitations of the elastomeric material. Traditionally, high temperature mechanical seals have utilized lap joints or mechanical interference fits between the seal ring and its supporting structure constructed of low expansion alloy materials. The lap joint arrangement functions well, but is very maintenance intensive and critical due to dirt contamination during assembly. Lower expansion alloy seal ring supporting structure-seal ring interference fits are also functional; however, because the lower expansion alloys characteristically have low corrosion resistance, they are not compatible with high temperature and corrosive fluids and fail rapidly, necessitating repair and/or replacement. The repair and/or replacement of a mechanical seal assembly is a costly procedure requiring considerable down time of the fluid handling apparatus with loss of productivity.

An attempt to overcome the limitations of the above-discussed prior art is shown in US-A-4364571 which generally discloses a mechanical seal assembly for sealing a rotatable shaft to a housing and the like, comprising a pair of seal rings, at least one of which is connected for rotation with the shaft and the other of which is non-rotatable and connected to the housing, one of the seal rings being arranged for limited axial movement relative to the shaft, the seal rings having radial seal faces opposing and engaging one another, one seal face being rotatable with respect to the other seal face, means resiliently urging one of the seal rings axially towards the other of the seal rings, one of the seal rings being formed of a relatively hard and non-weldable material, and a seal ring retaining and supporting flange surrounding the hard and non-weldable material seal ring.

More particularly, in the mechanical seal assembly of US-A-4364571 an annular recess is formed between an insert having the retaining and supporting flange and a gland forming part of the housing, and a high temperature resistant laminated gasket is positioned in that annular recess. However, the arrangement is such that the gasket is exposed to product fluid giving rise to the problem that the gasket loses its resiliency after substantial usage, presumably because it becomes filled with the fluid.

In accordance with one aspect of the present invention as claimed, the aforesaid generally disclosed mechanical seal asssembly is characterised in that a high temperature resistant laminated gasket is provided in a cavity between the hard and non-weldable material seal ring and the retaining and supporting flange, the gasket being substantially protected from exposure to process fluid, and in that a retaining ring is provided abutting the hard and non-weldable material seal ring and connected to the retaining and supporting flange for retaining the hard and non-weldable material seal ring in the retaining and supporting flange.

The advantage of this aspect of the invention is that since the gasket is substantially protected from exposure to process fluid, it will retain its resiliency for a considerable length of time during use and, because of its resiliency, will consistently urge the seal ring into intimate contact with the retaining ring.

In a preferred embodiment of the invention, the gasket is made of a graphite material generally sold under the name "GRAFOIL", thus overcoming the temperature limitations of elastomeric gaskets, and further to avoid the concerns of a loose lap joint. The gasket provides a positive connection of the hard, non-weldable material seal ring, such as silicon carbide, tungsten carbide and the like, to the seal ring retaining and supporting flange constructed of a high temperature, corrosion resistant alloy, such as 316 stainless steel, Hastelloy C and the like, capable of enduring the relatively elevated temperatures contemplated and use with corrosive fluids. The gasket is preferably constructed of a plurality of stacked washer or washer-like wafers or plates of GRAFOIL (trademark) and thus possesses a natural resiliency. The retaining ring is generally of the same metal as the retaining and supporting flange, and is welded thereto. The retaining ring is employed to make an integral assembly of the retaining and supporting flange, gasket, seal ring and retaining ring, which integral assembly encloses the cavity thereby ensuring that the gasket is substantially isolated from exposure to process fluid.

In accordance with another aspect of the invention as claimed there is provided a cartridge mechanical seal sub-assembly comprising a cylindrical sleeve adapted to encircle a shaft, a seal ring surrounding the sleeve and connected thereto for limited axial movement relative thereto, the seal ring being formed of a relatively hard and non-weldable material, a retaining and supporting flange surrounding the seal ring and having a radially extending portion at one end, a resilient means connected at one end to the sleeve and at the other end to the retaining and supporting flange, the resilient means providing the connection between the seal ring and the sleeve, a resilient high temperature resistant laminated gasket provided in a cavity between the seal ring and the retaining and supporting flange, the gasket being substantially protected from exposure to process fluid, and a retaining ring connected to the retaining and supporting flange at the end opposite to the radially extending portion and abutting the seal ring.

This aspect of the invention possesses the advantage, discussed above, that the gasket is not exposed to process fluid, together with the further advantage that by constructing the seal assembly as a cartridge, repair and/or replacement of the assembly is simplified because the assembly can be removed as a unit and easily replaced as a unit.

Preferably, a metal bellows constructed of welded together metal washer-like plates or members is welded at one end to the retaining and supporting flange and to a bellows flange at the other end. The bellows flange is drivingly connected to the rotatable shaft of the fluid handling apparatus, or, if the seal assembly is constructed as a cartridge, to a shaft sleeve which encircles the shaft and provides a driving connection therewith. The bellows resiliency urges the seal ring connected thereto toward the opposing seal ring, so that their faces engage one another. The bellows provides a driving connection between the shaft or the shaft sleeve, as the case may be, and the seal ring supporting structure.

A positive drive between the supporting structure and the supported seal ring may be provided by an anti-rotational pin which extends from the supporting structure into a suitable opening in the seal ring.

Alternatively, the bellows can be fixed to the housing, so as to urge the non-rotatable seal ring toward the rotatable seal ring.

In order that the invention may be well understood the preferred embodiment thereof, given by way of example, will now be described in more detail and with reference to the accompanying drawing, in which:
Figure 1 is an axial, partial sectional view of a mechanical seal assembly constructed according to this invention; and
Figure 2 is an enlarged sectional view of a portion of Figure 1.

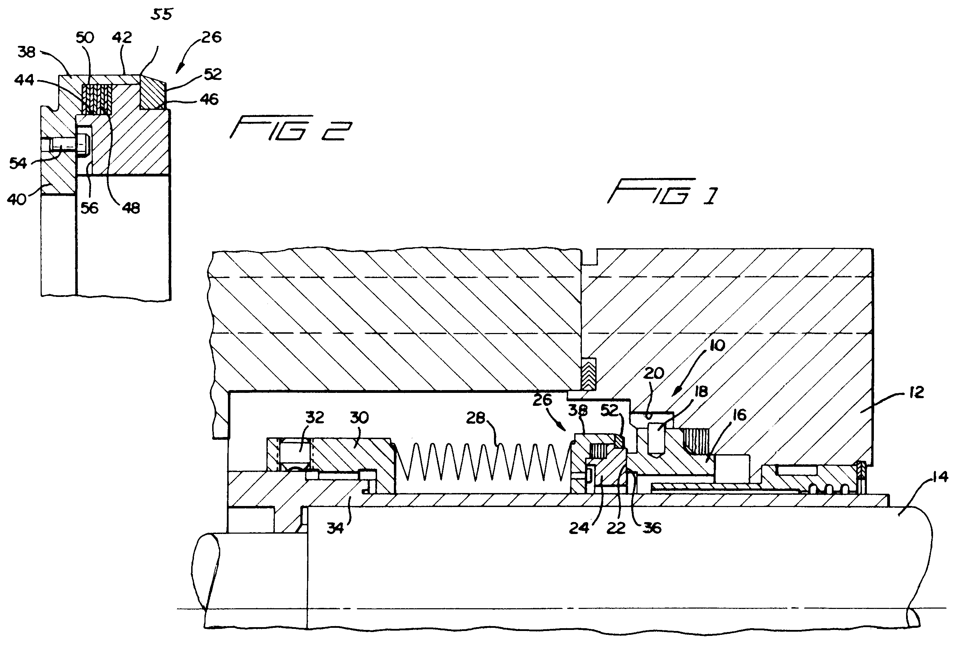

Referring first to Figure 1, there is illustrated a mechanical seal assembly 10 associated with a multiple part housing 12 and a rotatable shaft 14, the shaft 14 being connected at one end to a motor (not shown) and at the other end to a fluid handling device, such as a pump and the like (not shown). The mechanical seal assembly 10 functions to substantially prevent product fluid being handled by the fluid handling device from leaking along the shaft to the motor or bearing system to the atmosphere.

The mechanical seal assembly comprises a seal ring 16 connected to the housing 12 by a drive pin 18 fitting into a slot 20 in the housing 12. Thus the seal ring 16 is a non-rotatable seal ring. The seal ring 16 which may be constructed of carbon graphite, silicon carbide, tungsten carbide, a ceramic and the like, has a lapped, radially oriented, and annular seal face 22. The seal assembly further comprises a seal ring 24 connected by means of a retainer assembly 26, a bellows 28, an annular bellows flange 30, and a drive pin 32 to a shaft sleeve 34 engaging the rotatable shaft 14. Positive connecting means (not shown) may be use to insure the driving connection between the shaft sleeve 34 and the shaft 14. Thus the seal ring 24 is rotatable with the shaft 14. The seal ring 24 is preferably constructed of a non-weldable material, such as silicon carbide or tungsten carbide, has a lapped, radially oriented, and annular seal face 36 which opposes and contacts the seal face 22 of the seal ring 16. When the shaft 14 is rotating, the seal faces 22 and 36 of the seal rings 16 and 24 contact and rotate relative to one another.

As illustrated in Fig. 1, the mechanical seal assembly is constructed as a cartridge by using the shaft sleeve 34 which encircles the shaft 14 and rotates therewith. The shaft sleeve 34 may be omitted, if necessary and/or desirable without affecting the inventive concept of this invention. However, when the seal assembly is constructed as a cartridge, repair and/or replacement of the assembly is simplified because the assembly can be removed from the fluid handling apparatus as a unit and is easily replaced as a unit, reducing down time of the fluid handling apparatus.

Looking from left to right in Fig. 1, the bellows 28, is preferably constructed of a plurality of annular metal plates welded together in an integral structure, as known in the prior art. The bellows is welded at one end to the bellows flange 30 and at its opposite end to a retaining and supporting flange 38 of the retainer assembly 26. As previously explained, the bellows 28 provides a resilient force to urge the seal ring 24 toward the seal ring 16. When assembled, the bellows 28 is compressed to some degree to permit it to function as an axial force producing element.

The retaining and supporting flange 38, see especially Fig. 2, has a radial portion 40 and a cylindrical portion 42, the portion 42 having an inner diameter substantially equal to the outer diameter of the seal ring 24. The seal ring 24 is provided with a reduced diameter rear portion 44 and a reduced diameter forward portion 46. The cylindrical portion 42 of the flange 38 has an axial length substantially equal to the axial length of the seal ring 24 minus the axial length of the forward portion 46. The flange 38 and the reduced diameter rear portion 44 of the seal ring 24 form an annular recess, cavity or pocket 48 which receives a gasket 50, preferably constructed of stacked washer or washer-like wafers or plates of a graphite material sold under the name "GRAFOIL". Because of the laminations, the gasket 50 possesses limited resiliency, and becomes slightly compressed during assembly of the retaining and supporting flange, as will be explained.

A retaining ring member 52 is welded, as at 55, to the cylindrical portion 42 of the flange 38 and is constructed of such size and dimensions to fit onto the reduced diameter forward portion 46 of the seal ring 24. The ring member 52 functions to maintain the seal ring 24 in the flange 38 with the gasket 50 providing, because of its limited resiliency, a seal against substantial leakage of process fluid into the interface of the seal ring 24 and its retaining and supporting flange 38. Also the use of a lap joint is avoided; the outer diameter of the seal ring 24 substantially matches the inner diameter of the flange 38, without the critical fit of a lap joint. Suitable precautions are taken during the assembly of the seal ring and the flange 38 to ensure a substantial fit of the ring 24 in the flange 38, as explained hereinafter.

A single drive pin 54 extending from the radial portion of the flange 38 and into a pocket 56 in the seal ring 24 insures a positive drive between the shaft 14 and the seal ring 24.

The procedure for installing the seal ring 24 into the flange 38 is as follows:
1. The pin 54 is inserted into the flange 38 before assembly of the flange with the seal ring.
2. The gasket 50 is installed onto the seal ring and then the flange is heated by induction heating to expand the flange to receive the seal ring 24.
   Alternatively, the seal ring can be press fitted into the retaining and supporting flange 38 avoiding the induction heating step.
3. The retaining ring member 52 is installed onto the seal ring and against the flange.
4. Pressure is applied to the retaining ring member 52 to seat ring 52 against the flange and to compress the gasket 50.
5. The retaining ring member 52 is welded to the flange 38 while applying pressure as in step 4.
6. The assembly is tested for leakage into the gasket.

Applicant has thus provided an improved mechanical seal assembly which can use high temperature, corrosion resistance alloys for a retaining and supporting flange for a hard, non-weldable seal ring, without using non-reliable mechanical interference fits or lap joints between the seal ring and its retaining and supporting flange.

## Claims

1. A mechanical seal assembly for sealing a rotatable shaft (14) to a housing (12) and the like, comprising a pair of seal rings (16, 24), at least one (24) of which is connected for rotation with the shaft (14) and the other (16) of which is non-rotatable and connected to the housing (12), one (24) of the seal rings (16, 24) being arranged for limited axial movement relative to the shaft (14), the seal rings (16, 24) having radial seal faces (22, 36) opposing and engaging one another, one seal face (36) being rotatable with respect to the other seal face (22), means (28) resiliently urging one (24) of the seal rings (16, 24) axially towards the other (16) of the seal rings (16, 24), one (24) of the seal rings (16, 24) being formed of a relatively hard and non-weldable material, and a seal ring retaining and supporting flange (38) surrounding the hard and non-weldable material seal ring (24), characterised in that a high temperature resistant laminated gasket (50) is provided in a cavity (48) between the hard and non-weldable material seal ring (24) and the retaining and supporting flange (38), the gasket (50) being substantially protected from exposure to process fluid, and in that a retaining ring (52) is provided abutting the hard and non-weldable material seal ring (24) and connected to the retaining and supporting flange (38) for retaining the hard and non-weldable material seal ring (24) in the retaining and supporting flange (38).

2. A mechanical seal assembly as claimed in claim 1, wherein the hard and non-weldable material seal ring (24) is constructed of silicon carbide, and the retaining and supporting flange (38) and the retaining ring (52) are constructed of a corrosion resistant metal alloy.

3. A mechanical seal assembly as claimed in claim 1 or claim 2, wherein the laminated gasket (50) is constructed of a plurality of stacked annular wafer-like members providing a resilient structure, the gasket (50) being compressed in the cavity (48) and resiliently urging the hard and non-weldable material seal ring (24) towards the retaining ring (52).

4. A mechanical seal assembly as claimed in any of the preceding claims, wherein the hard and non-weldable material seal ring (24) is the rotatable seal ring (24), and wherein the resiliently urging means (28) comprises bellows (28) welded at one end to the retaining and supporting flange (38) and connected at its opposite end to the shaft (14).

5. A mechanical seal assembly as claimed in claim 4, further comprising a positive drive connection (54) between the rotatable seal ring (24) and the retaining and supporting flange (38) and thus the bellows (28) and the shaft (14), the positive drive connection (54) comprising a drive pin (54) projecting from the retaining and supporting flange (38) and received in a groove (56) in the rotatable seal ring (24).

6. A mechanical seal assembly as claimed in any of the preceding claims, wherein the retaining and supporting flange (38) and the retaining ring (52) are constructed of a corrosion resistant stainless steel.

7. A cartridge mechanical seal sub-assembly comprising a cylindrical sleeve (34) adapted to encircle a shaft (14), a seal ring (24) surrounding the sleeve (34) and connected thereto for limited axial movement relative thereto, the seal ring (24) being formed of a relatively hard and non-weldable material, a retaining and supporting flange (38) surrounding the seal ring (24) and having a radially extending portion (40) at one end, a resilient means (28) connected at one end to the sleeve (34) and at the other end to the retaining and supporting flange (38), the resilient means (28) providing the connection between the seal ring (24) and the sleeve (34), a resilient high temperature resistant laminated gasket (50) provided in a cavity (48) between the seal ring (24) and the retaining and supporting flange (38), the gasket (50) being substantially protected from exposure to process fluid, and a retaining ring (52) connected to the retaining and supporting flange (38) at the end opposite to the radially extending portion (40) and abutting the seal ring (24).

8. A cartridge mechanical seal sub-assembly as claimed in claim 7, wherein the cavity (48) is annular and formed in the seal ring (24) and partly defined by the retaining and supporting flange (38).

9. A cartridge mechanical seal sub-assembly as claimed in claim 7 or claim 8, further comprising an annular reduced portion (46) at one end of the seal ring (24) to receive the retaining ring (52).

## Patentansprüche

1. Gleitringdichtung zum Abdichten einer drehbaren Welle (14) gegen ein Gehäuse (12) o.ä., mit zwei Gleitringen (16, 24), von denen mindestens einer (24) zum Umlauf mit der Welle (14) und der andere (16) nicht drehbar und mit dem Gehäuse (12) verbunden ist, ein (24) Gleitring (16, 24) begrenzt axial gegenüber der Welle (14) verschiebbar ist, die Gleitringe (16, 24) radiale, gegenüberstehende und aneinander anliegende Dichtflächen (22, 36) aufweisen, eine Dichtfläche (36) gegenüber der anderen Dichtfläche (22) drehbar ist, mit Mitteln (28), die einen (24) Gleitring (16, 24) axial federnd gegen den anderen (16) Gleitring (16, 24) andrücken, wobei ein (24) Gleitring (16, 24) aus einem relativ harten und nicht schweißbaren Material hergestellt ist, und mit einem den Gleitring (24) aus hartem und nicht schweißbarem Material umgebenden Stützflansch (38) für den Gleitring, dadurch gekennzeichnet, daß eine hochtemperaturfeste Lamellendichtung (50) in einem Raum (48) zwischen dem Gleitring (24) aus hartem und nicht schweißbarem Material und dem Stützflansch (38) vorgesehen ist, die Dichtung (50) im wesentlichen gegen einwirkendes Prozeßströmungsmittel geschützt ist, und daß ein Haltering (52) in Anlage an den Gleitring (24) aus hartem und nicht schweißbarem Material vorgesehen und mit dem Stützflansch (38) verbunden ist, um den Gleitring (24) aus hartem und nicht schweißbarem Material in dem Stützflansch (38) zu halten.

2. Gleitringdichtung nach Anspruch 1, bei der der Gleitring (24) aus hartem und nicht schweißbarem Material aus Siliziumcarbit hergestellt ist und der Stützflansch (38) und der Haltering (52) aus einer korrosionsfesten Metallegierung hergestellt ist.

3. Gleitringdichtung nach Anspruch 1 oder 2, bei der die Lamellendichtung (50) aus mehreren gestapelten ringförmigen scheibenförmigen Bauteilen hergestellt ist, die nachgiebig gestaltet sind, wobei die Dichtung (50) in dem Raum (48) komprimiert ist und den Gleitring (24) aus hartem und nicht schweißbarem Material gegen den Haltering (52) nachgiebig andrückt.

4. Gleitringdichtung nach einem der vorhergehenden Ansprüche, bei der der Gleitring (24) aus hartem und nicht schweißbarem Material der drehbare Gleitring (24) ist, und bei der die federnden Andrückmittel (28) einen Balgen (28) aufweisen, der an einem Ende an dem Stützflansch (38) angeschweißt und am entgegengesetzten Ende mit der Welle (14) verbunden ist.

5. Gleitringdichtung nach Anspruch 4, ferner mit einer Formschlußverbindung (54) zwischen dem drehbaren Gleitring (24) und dem Stützflansch (38) und somit mit dem Balgen (28) und der Welle (14), wobei die Formschlußverbindung (54) einen Stift (54) aufweist, der aus dem Stützflansch (38) vorragt und in einer Nut (56) im drehbaren Gleitring (24) aufgenommen ist.

6. Gleitringdichtung nach einem der vorhergehenden Ansprüche, bei der der Stützflansch (38) und der Haltering (52) aus korrosionsfestem rostfreiem Stahl hergestellt sind.

7. Gleitringdichtungsbaugruppe in Patronenform, mit einer zylindrischen Hülse (34) zum Umschließen einer Welle (14), einem die Hülse (34) umgebenden und mit dieser für eine begrenzte axiale Verschiebung verbundenen Gleitring (24), wobei der Gleitring (24) aus einem relativ harten und nicht schweißbaren Material hergestellt ist, mit einem Stützflansch (38), der den Gleitring (24) umgibt und an einem Ende einen radialen Abschnitt (40) aufweist, mit Federmitteln (28), die an einem Ende mit der Hülse (34) und am anderen Ende mit dem Stützflansch (38) verbunden sind, und die Federmittel die Verbindung zwischen dem Gleitring (24) und der Hülse (34) herstellen, mit einer hochtemperaturfesten nachgiebigen Lamellendichtung (50) in einem Raum (48) zwischen dem Gleitring (24) und dem Stützflansch (38), wobei die Dichtung (50) im wesentlichen gegen einwirkendes Prozeßströmungsmittel geschützt ist, und mit einem Haltering (52), der mit dem Stützflansch (38) an dem dem radialen Abschnitt (40) gegenüberliegenden Ende verbunden und in Anlage an den Gleitring ist.

8. Gleitringdichtungsbaugruppe in Patronenform nach Anspruch 7, bei der der Raum (48) ringförmig und in dem Gleitring (24) gebildet ist sowie teilweise von dem Stützflansch (38) definiert ist.

9. Gleitringdichtungsbaugruppe in Patronenform nach Anspruch 7 oder 8, ferner mit einem ringförmigen verringerten Abschnitt (46) an einem Ende des Gleitringes (24) zur Aufnahme des Halteringes (52).

## Revendications

1. Ensemble mécanique d'étanchéité pour rendre étanche un arbre rotatif (14) vis-à-vis d'un logement (12) et analogue, comprenant une paire de bagues d'étanchéité (16, 24), dont au moins l'une (24) est connectée pour rotation avec l'arbre (14) et dont l'autre (16) est non rotative et reliée au logement (12), l'une (24) des bagues d'étanchéité (16, 24) étant disposée pour un déplacement axial limité par rapport à l'arbre (14), les bagues d'étanchéité (16, 24) ayant des faces d'étanchéité radiales (22, 36) opposées et engagées l'une dans l'autre, une face (36) d'étanchéité pouvant tourner par rapport à l'autre face d'étanchéité (22), un moyen (28) sollicitant élastiquement l'une (24) des bagues d'étanchéité (16, 24) axialement dans la direction de l'autre (16) des bagues d'étanchéité (16, 24), l'une (24) des bagues d'étanchéité (16, 24) étant constituée d'un matériau relativement dur et non soudable, et un flasque (38) de retenue et de support de bague d'étanchéité entourant la bague d'étanchéité en matériau dur et non soudable (24), caractérisé en ce qu'une garniture stratifiée résistant aux hautes températures (50) est prévue dans une cavité (48) entre la bague d'étanchéité en matériau dur et non soudable (24) et le flasque de retenue et de support (38), la garniture (50) étant sensiblement protégée contre l'exposition au fluide du procédé, et en ce qu'une bague de retenue (52) est prévue en aboutement avec la bague d'étanchéité en matériau dur et non soudable (24) et est reliée au flasque de retenue et de support (38) pour maintenir la bague d'étanchéité en matériau dur et non soudable (24) dans le flasque de retenue et de support (38).

2. Ensemble mécanique d'étanchéité selon la revendication 1, dans lequel la bague d'étanchéité en matériau dur et non soudable (24) est constituée de carbure de silicium, et le flasque de retenue et de support (38) et la bague de retenue (52) sont constitués d'un alliage de métaux résistant à la corrosion.

3. Ensemble mécanique d'étanchéité selon la revendication 1 ou la revendication 2, dans lequel la garniture stratifiée (50) est constituée d'une multitude d'éléments annulaires en forme de rondelles empilées fournissant une structure élastique, la garniture (50) étant comprimée dans la cavité (48) et sollicitant élastiquement la bague d'étanchéité en matériau dur et non soudable (24) vers la bague de retenue (52).

4. Ensemble mécanique d'étanchéité selon l'une quelconque des revendications précédentes, dans lequel la bague d'étanchéité en matériau dur et non soudable (24) est la bague d'étanchéité rotative (24), et dans lequel le moyen de sollicitation élastique (28) comprend un soufflet (28) soudé à l'une de ses extrémités au flasque de retenue et de support (38) et relié à son extrémité opposée à l'arbre (14)

5. Ensemble mécanique d'étanchéité selon la revendication 4, comprenant en outre une connexion d'entraînement positive (54) entre la bague d'étanchéité rotative (24) et le flasque de retenue et de support (38) et donc le soufflet (28) et l'arbre (14), la connexion d'entraînement positive (54) comprenant un axe d'entraînement (54) en saillie sur le flasque de retenue et de support (38) et reçu dans une rainure (56) pratiquée dans la bague d'étanchéité rotative (24).

6. Ensemble mécanique d'étanchéité selon l'une quelconque des revendications précédentes, dans lequel le flasque de retenue et de support (38) et la bague de retenue (52) sont constitués d'acier inoxydable résistant à la corrosion.

7. Sous-ensemble mécanique d'étanchéité en cartouche comprenant un manchon cylindrique (34) appelé à entourer un arbre (14), une bague d'étanchéité (24) entourant le manchon (34) et relié à celui-ci pour déplacement axial limité par rapport à lui, la bague d'étanchéité (24) étant formée d'un matériau relativement dur et non soudable, un flasque de retenue et de support (38) entourant la bague d'étanchéité (24) et présentant une partie s'étendant radialement (40 à l'une de ses extrémités, un moyen élastique (28) relié à l'une de ses extrémités au manchon (34) et à son autre extrémité au flasque de retenue et de support (38), le moyen élastique (28) fournissant la connexion entre la bague d'étanchéité (24) et le manchon (34), une garniture stratifiée élastique résistant aux hautes températures (50) prévue dans une cavité (48) entre la bague d'étanchéité (24) et le flasque de retenue et de support (38), la garniture (50) étant sensiblement protégée contre l'exposition au fluide du procédé, et une bague de retenue (52) reliée au flasque de retenue et de support (38) à l'extrémité opposée à la partie s'étendant radialement (40) et en aboutement avec la bague d'étanchéité (24).

8. Sous-ensemble mécanique d'étanchéité en cartouche selon la revendication 7, dans lequel la cavité (48) est annulaire et ménagée dans la bague d'étanchéité (24) et définie en partie par le flasque de retenue et de support (38).

9. Sous-ensemble mécanique d'étanchéité en cartouche selon la revendication 7 ou la revendication 8, comprenant en outre une partie annulaire réduite (46) à une extrémité de la bague d'étanchéité (24) de façon à recevoir la bague de retenue (52).
